# EUROPÄISCHE PATENTSCHRIFT

(11) **EP 2 457 280 B1**
(45) Veröffentlichungstag und Bekanntmachung des Hinweises auf die Patenterteilung: **23.10.2013**
(21) Anmeldenummer: 10726967.2
(22) Anmeldetag: 24.06.2010
(51) Int. Cl.: H01M 10/44, H02J 7/00

(54) **SERIENSCHALTUNG VON SCHALTREGLERN ZUR ENERGIEÜBERTRAGUNG IN BATTERIESYSTEMEN**
SERIES CONNECTION OF SWITCHING REGULATORS FOR ENERGY TRANSFER IN BATTERY SYSTEMS
MONTAGE EN SÉRIE DE RÉGULATEURS À DÉCOUPAGE POUR LE TRANSFERT D'ÉNERGIE DANS DES SYSTÈMES DE BATTERIE

(30) Priorität: 20.07.2009 DE 102009027833
(43) Veröffentlichungstag der Anmeldung: 30.05.2012
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE)
(74) Vertreter: Bee, Joachim
(86) Internationale Anmeldenummer: PCT/EP2010/058976
(87) Internationale Veröffentlichungsnummer: WO 2011/009691

(56) Entgegenhaltungen:
- WO-A2-2004/049540
- US-A1- 2005 017 682
- US-A1- 2008 185 994

## Beschreibung

### Stand der Technik

Es besteht ein wachsender Bedarf an Batteriesystemen, welche in stationären Anwendungen wie Windkraftanlagen und Notstromsystemen oder aber in Fahrzeugen zum Einsatz kommen sollen. Alle diese Anwendungen stellen hohe Anforderungen an die Zuverlässigkeit und Ausfallsicherheit. Der Grund hierfür ist, dass ein vollständiger Ausfall der Spannungsversorgung durch das Batteriesystem zu einem Ausfall des Gesamtsystems führen kann. So werden bei Windkraftanlagen Batterien eingesetzt, um bei starkem Wind die Rotorblätter zu verstellen und die Anlage vor übermäßigen mechanischen Belastungen zu schützen, die die Windkraftanlage beschädigen oder sogar zerstören könnten. Im Falle des Ausfalls der Batterie eines Elektroautos würde dieses fahruntüchtig. Ein Notstromsystem wiederum soll gerade den unterbrechungsfreien Betrieb z.B. eines Krankenhauses sicherstellen und daher selbst möglich nicht ausfallen können.

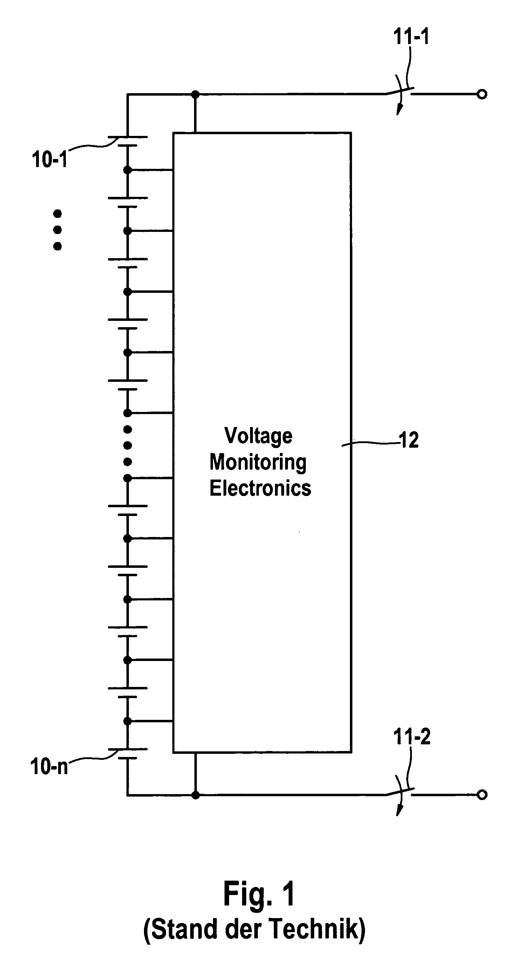

Um die für die jeweilige Anwendung geforderte Leistung und Energie zur Verfügung stellen zu können, werden einzelne Batteriezellen in Serie und teilweise zusätzlich parallel geschaltet. Fig. 1 zeigt ein Prinzipschaltbild für eine Serienschaltung von Batterien. Eine Vielzahl von Batteriezellen 10-1 bis 10-n sind in Serie geschaltet, um die beispielsweise in einem PKW für den Elektromotor erforderliche hohe Betriebsspannung durch Summierung der Spannung der Einzelzellen 10-1,...,10-n zu erreichen. Die hohe Betriebsspannung kann durch ausgangsseitige Schalter 11-1 und 11-2 von den folgenden, nicht dargestellten leistungselektronischen Bauelementen wie Wechselrichtern abgekoppelt werden. Da der gesamte Ausgangsstrom der Batterie aufgrund der Serienschaltung der Batteriezellen 10-1,...,10-n in jeder der Batteriezellen 10-1,...,10-n fließt, wobei der Ladungstransport durch elektrochemikalische Prozesse innerhalb der Batteriezellen 10-1,...,10-n geschieht, bedeutet der Ausfall einer einzigen Batteriezelle im Extremfall, dass die Gesamtanordnung keinen Strom und damit keine elektrische Energie mehr bereitstellen kann. Um einen drohenden Ausfall einer Batteriezelle 10-1,...,10-n rechtzeitig erkennen zu können, wird gewöhnlich ein sog. BatterieManagementsystem 12 verwendet, welches mit beiden Polen jeder der Batteriezellen 10-1,...,10-n verbunden oder verbindbar ist und in regelmäßigen oder wählbaren Abständen Betriebsparameter wie Spannung und Temperatur jeder Batteriezelle 10-1,...,10-n und daraus deren Ladezustand (State of Charge, SoC) bestimmt. Dies bedeutet einen hohen Aufwand bei gleichzeitig geringer Flexibilität der elektrischen Betriebsdaten des Batteriesystems.

Weitere Nachteile der Serienschaltung einer Vielzahl von Batteriezellen sind:
1. Für unterschiedliche Betriebszustände der mit der Batterie zu betreibenden Einrichtung werden Bedingungen für die bereitzustellende Betriebsspannung, den maximalen Strom und die gespeicherte Energie gestellt, welche sich nur dann vereinen lassen, wenn eine höhere Zahl von Batteriezellen gekoppelt wird, als zur Erfüllung der einzelnen Anforderungen eigentlich notwendig wäre. Dies erhöht den Preis und das inbesondere bei einem Elektroauto störende Gewicht und Volumen des Batteriesystems.
2. Die Montage der Batterie, also das Zusammenschalten der einzelnen Zellen, erfolgt wegen der durch die Serienschaltung summierten Spannungen der einzelnen Batteriezellen bei hohen Spannungen bis 1000 V, weshalb ein Austausch der Batterie, einzelner Zellen oder Module nicht in örtlichen Werkstätten bzw. im Falle einer stationären Anwendung nur mit Spezialwerkzeug von besonders ausgebildeten Fachkräften vorgenommen werden kann. Dadurch ergibt sich ein hoher logistischer Aufwand für die Wartung von Batteriesystemen im Fehlerfall.
3. Um das Batteriesystem spannungsfrei zu schalten, d.h. die eigentliche Batterie von der Last zu trennen, müssen Leistungsschalter 11-1 und 11-2 vorgesehen werden, welche typischerweise als Schütze ausgeführt und welche für die zu erwartenden hohen Ströme und Spannungen sehr teuer sind.

### Offenbarung der Erfindung

Die Erfindung macht es sich zur Aufgabe, eine Vorrichtung einzuführen, die die obengenannten Nachteile des Standes der Technik überwinden kann.

Ein erster Aspekt der Erfindung betrifft einen Energieübertrager für ein Batteriesystem, der Energieübertrager einen ersten und einen zweiten primären DC/DC-Umsetzer mit jeweils zwei Eingängen und zwei Ausgängen umfasst, wobei die Eingänge für das Anschließen eines Batteriemoduls ausgebildet sind und wobei der erste und der zweite primäre DC/DC-Umsetzer ausgangsseitig in Serie geschaltet sind. Erfindungsgemäß verfügt der Energieübertrager über wenigstens einen ersten sekundären DC/DC-Umsetzer mit zwei Eingängen, die mit den Ausgängen des zweiten primären DC/DC-Umsetzers verbunden sind, und mit einem mit einem der Ausgänge des ersten primären DC/DC-Umsetzers verbundenen ersten Ausgang.

Die Erfindung besitzt den Vorteil, dass die ausgangsseitig in Serie geschalteten primären DC/DC-Umsetzer eine wählbare, von der Spannung und somit vom Ladestand der Batteriemodule unabhängige Ausgangsspannung erzeugen, wobei die an den ersten und zweiten primären DC/DC-Umsetzer angeschlossenen Batteriemodule unterschiedlich stark belastet werden können. Dies wird ermöglicht durch den ersten sekundären DC/DC-Umsetzer, dessen Eingänge mit den Ausgängen des zweiten primären DC/DC-Umsetzer verbunden sind und bei Aktivierung des ersten sekundären DC/DC-Umsetzers dem zweiten primären DC/DC-Umsetzer Energie entnimmt und über den mit einem Ausgang des ersten primären DC/DC-Umsetzers verbundenen ersten Ausgang überträgt. Dadurch wird der erste primäre DC/DC-Umsetzer und das an diesen eingangsseitig angeschlossene Batteriemodul entlastet. Die Erfindung erlaubt auf diese Weise z.B. das sog. Load-Balancing, bei dem der Ladezustand jedes Batteriemoduls möglichst gleich sein soll, so dass keine Batteriezelle unter einen kritischen Wert entladen wird, obwohl andere Batteriezellen noch mehr Energie zur Verfügung stellen könnten.

Der Einsatz von DC/DC-Umsetzern macht außerdem die Wahl einer je nach Betriebssituation geeigneten Gesamtspannung möglich, da die Ausgangsspannung der einzelnen DC/DC-Umsetzer nach bekannter Art eingestellt werden kann. Außerdem wird die Ausgangsspannung unabhängig von der Zahl der primärseitig angeschlossenen Batteriezellen. Dadurch kann die Auslegung des Batteriesystems rein nach Energie- und Leistungskriterien unabhängig von der für die jeweilige Anwendung geforderten Gesamtspannung erfolgen. Ein weiterer Vorteil besteht darin, dass die teuren Schütze 11-1 und 11-2 entfallen können, weil die Hochspannung am Batterieausgang durch Abschalten der DC/DC-Umsetzer auf einfache Weise abgeschaltet werden kann.

Der Energieübertrager verfügt bevorzugt über einen zweiten sekundären DC/DC-Umsetzer mit zwei Eingängen, die mit den Ausgängen des ersten primären DC/DC-Umsetzers verbunden sind. Der zweite sekundäre DC/DC-Umsetzer besitzt dabei einen mit einem der Ausgänge des zweiten primären DC/DC-Umsetzers verbundenen ersten Ausgang. Der zweite sekundäre DC/DC-Umsetzer ist dabei ausgebildet, dem ersten primären DC/DC-Umsetzer Energie zu entnehmen und an den zweiten primären DC/DC-Umsetzer zu übertragen. Dadurch wird es möglich, einen Ausgleich nicht nur durch Übertragung von Energie vom zweiten zum ersten primären DC/DC-Umsetzer zu schaffen, sondern auch entgegengesetzt vom ersten primären DC/DC-Umsetzer Energie zum zweiten primären DC/DC-Umsetzer zu übertragen. Selbstredend kann auch eine größere Anzahl von primären DC/DC-Umsetzern in Serie geschaltet werden, wobei an den Ausgang eines jeden primären DC/DC-Umsetzers ein sekundärer DC/DC-Umsetzer angeschlossen wird.

Besonders bevorzugt verfügt der Energieübertrager über einen dritten primären DC/DC-Umsetzer mit zwei für das Anschließen eines Batteriemoduls ausgebildeten Eingängen und zwei Ausgängen. Der dritte primäre DC/DC-Umsetzer ist mit dem ersten und dem zweiten primären DC/DC-Umsetzer ausgangsseitig so in Serie geschaltet, dass der zweite primäre DC/DC-Umsetzer direkt mit dem ersten und dem dritten primären DC/DC-Umsetzer verbunden ist, d.h., dass der zweite primäre DC/DC-Umsetzer in der Serienschaltung mittig angeordnet ist. Der erste sekundäre DC/DC-Umsetzer weist einen mit einem Ausgang des dritten primären DC/DC-Umsetzers verbundenen zweiten Ausgang auf. Der erste sekundäre DC/DC-Umsetzer ist somit in der Lage, dem zweiten primären DC/DC-Umsetzer Energie zu entnehmen und diese wahlweise über den ersten Ausgang an den ersten primären DC/DC-Umsetzer oder über den zweiten Ausgang an den dritten primären DC/DC-Umsetzer zu übertragen. Bei Serienschaltung einer noch höheren Zahl von primären DC/DC-Umsetzern kann eine entsprechende Anzahl sekundärer DC/DC-Umsetzer vorgesehen sein, die jeweils einem der beiderseits benachbarten primären DC/DC-Umsetzer Energie übertragen können. Dadurch wird eine besonders hohe Flexibilität bei der Verteilung der Energie und damit bei der Belastung der verschiedenen Batteriemodule erreicht. Wird z.B. einem primären DC/DC-Umsetzer Energie durch den zugeordneten sekundären DC/DC-Umsetzer entnommen und an den benachbarten primären DC/DC-Umsetzer übertragen, kann der mit dem benachbarten primären DC/DC-Umsetzer angeschlossene sekundäre DC/DC-Umsetzer diese Energie direkt an den nächsten primäre DC/DC-Umsetzer weiterübertragen. Bevorzugt sind auch der oberste und der unterste primäre DC/DC-Umsetzer in der Serienschaltung (im Beispiel mit dem ersten, zweiten und dritten primären DC/DC-Umsetzer also der erste und der dritte primäre DC/DC-Umsetzer) mit sekundären DC/DC-Umsetzern verbunden, welche jedoch nur entweder den ersten oder den zweiten Ausgang besitzen, da der oberste und der unterste primäre DC/DC-Umsetzer nur einen benachbarten primären DC/DC-Umsetzer besitzen.

Schaltungstechnisch kann der erste sekundäre DC/DC-Umsetzer ausgelegt sein, dem zweiten primären DC/DC-Umsetzer Energie zu entnehmen und in einem Entlademodus des Energieübertragers für das Entladen der Batteriemodule an den ersten primären DC/DC-Umsetzer und in einem Auflademodus des Energieübertragers für das Aufladen der Batteriemodule an den dritten primären DC/DC-Umsetzer zu übertragen. Dadurch wird die Wahl, über welchen Ausgang des ersten sekundären DC/DC-Umsetzers die dem zweiten primären DC/DC-Umsetzer entnommene Energie übertragen wird, durch den Betriebsmodus des Energieübertragers getroffen. Wird den Batteriemodulen Energie entnommen, beispielsweise wenn ein mit einem entsprechenden Energieübertrager ausgestattetes Kraftfahrzeug beschleunigt, wird die Energie an den ersten primären DC/DC-Umsetzer abgegeben, wenn das Kraftfahrzeug abbremst und die Bremsenergie über einen Generator an die Batteriemodule zurückgeführt werden soll, wird die Energie an den dritten primären DC/DC-Umsetzer abgegeben.

Vorzugsweise verfügt der erste sekundäre DC/DC-Umsetzer über eine Spule, einen ersten Schalter und eine erste Diode. Die Spule und der erste Schalter sind zwischen die Eingänge des ersten sekundären DC/DC-Umsetzers in Serie geschaltet, die Diode ist zwischen einen Verbindungspunkt zwischen Spule und erstem Schalter und den ersten Ausgang des ersten sekundären DC/DC-Umsetzers geschaltet.

In einer bevorzugten Variante des ersten sekundären DC/DC-Umsetzers mit einem ersten und einem zweiten Ausgang verfügt der ersten sekundäre DC/DC-Umsetzer außerdem über einen zweiten Schalter und eine zweite Diode, wobei der zweite Schalter mit dem ersten Schalter und der Spule so in Serie zwischen die Eingänge des ersten sekundären DC/DC-Umsetzers geschaltet ist, dass die Spule zwischen den ersten und den zweiten Schalter geschaltet ist. Die zweite Diode ist zwischen einen Verbindungspunkt zwischen Spule und zweiten Schalter und den zweiten Ausgang des ersten sekundären DC/DC-Umsetzers geschaltet ist.

Jeder primäre DC/DC-Umsetzer kann einen Steuereingang für ein Steuersignal aufweisen und ausgebildet sein, auf den Empfang des Steuersignals hin die Ausgänge des primären DC/DC-Umsetzers miteinander elektrisch zu verbinden und wenigstens einen der Eingänge des primären DC/DC-Umsetzers elektrisch abzukoppeln. Diese Ausführungsform erlaubt es, einen primären DC/DC-Umsetzer im Betrieb selektiv auszuschalten, etwa weil eine Batteriezelle des eingangsseitig angeschlossenen Batteriemoduls defekt ist. Durch das Verbinden der Ausgänge des primären DC/DC-Umsetzers kann in der Gesamtanordnung weiterhin ein Ausgangsstrom fließen. Um das Batteriemodul nicht weiter zu belasten, wird es außerdem abgekoppelt. Diese Ausführungsform erlaubt daher den Weiterbetrieb der Vorrichtung trotz des Ausfalls einer oder mehrerer Batteriezellen. Außerdem wird ggf. der Austausch eines Batteriemoduls im laufenden Betrieb möglich, ohne dass die Erzeugung der Gesamtspannung unterbrochen werden muss.

Ein zweiter Aspekt der Erfindung führt ein Batteriesystem mit einem Energieübertrager gemäß dem ersten Aspekt der Erfindung und einer Mehrzahl von Batteriemodulen ein. Die Batteriemodule verfügen jeweils über wenigstens eine Batteriezelle. Die Batteriepole der Batteriemodule sind mit einem entsprechenden Eingang der ersten und zweiten Eingänge eines DC/DC-Umsetzer des Energieübertragers lösbar verbunden.

Ein dritter Aspekt der Erfindung betrifft ein Kraftfahrzeug mit einem Energieübertrager gemäß dem ersten Aspekt der Erfindung.

### Kurzbeschreibung der Abbildungen

Die Erfindung wird im folgenden anhand von Abbildungen von Ausführungsbeispielen näher erläutert. Es zeigen:
Fig. 1 eine Batterie mit Batteriemanagementsystem nach dem Stand der Technik;
Fig. 2 ein erste Variante eines ersten Ausführungsbeispiels der Erfindung;
Fig. 3 eine zweite Variante des ersten Ausführungsbeispiels der Erfindung;
Fig. 4 ein zweites Ausführungsbeispiel der Erfindung; und
Fig. 5 ein detailliertes Schaltbild eines dritten Ausführungsbeispiels der Erfindung.

### Ausführliche Beschreibung der Abbildungen

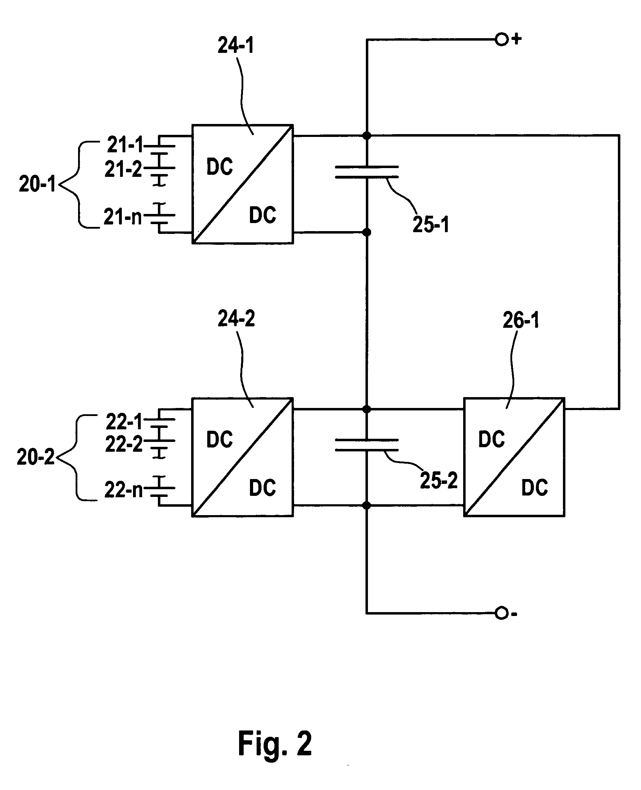

Fig. 2 zeigt eine erste Variante eines ersten Ausführungsbeispiels der Erfindung. Zwei Batteriemodule 20-1 und 20-2 mit jeweils einer Mehrzahl von Batteriezellen 21-1 bis 21-n bzw. 22-1 bis 22-n sind jeweils mit den Eingängen eines primären DC/DC-Umsetzers 24-1 bzw. 24-2 verbunden. Die primären DC/DC-Umsetzer 24-1, 24-2 können nach bekannter Art aufgebaut sein und eine Ausgangsspannung erzeugen, die unabhängig von der Spannung der Batteriemodule 20-1, 20-2 ist und auch größer als diese sein kann. Vorzugsweise verfügen die primären DC/DC-Umsetzer dabei über eine interne Rückkopplung, um die Ausgangsspannung präzise kontrollieren zu können. Die Ausgänge der primären DC/DC-Umsetzer 24-1, 24-2 sind jeweils mit einem Pufferkondensator 25-1 bzw. 25-2 verbunden, der die Ausgangsspannung des jeweiligen primären DC/DC-Umsetzers 24-1, 24-2 glättet und als Kurzzeitenergiespeicher wirkt. Die primären DC/DC-Umsetzer 24-1, 24-2 sind ausgangsseitig in Serie geschaltet, wobei der oberste primäre DC/DC-Umsetzer 24-1 mit einem positiven Ausgang der Anordnung und der unterste primäre DC/DC-Umsetzer 24-2 mit einem negativen Ausgang der Anordnung verbunden sind. Die gezeigte erste Variante des ersten Ausführungsbeispiels verfügt über einen sekundären DC/DC-Umsetzer 26-1, dessen Eingänge mit den Ausgängen des primären DC/DC-Umsetzers 24-2 und damit mit den beiden Anschlüssen des Pufferkondensators 25-2 verbunden sind. Der sekundäre DC/DC-Umsetzer 26-1 ist ausgebildet, bei Aktivierung dem primären DC/DC-Umsetzer 24-2 Energie zu entnehmen und über einen ersten Ausgang an den Ausgang des primären DC/DC-Umsetzers 24-1 zu übertragen, so dass dieser entlastet wird. Der primäre DC/DC-Umsetzer 24-1 muss dadurch dem eingangsseitig angeschlossenen Batteriemodul 20-1 weniger Energie entnehmen, um seine Ausgangsspannung stabil zu halten. Dadurch kann bei Aktivierung des sekundären DC/DC-Umsetzers 26-1 das Batteriemodul 20-1 entlastet und das Batteriemodul 20-2 stärker belastet werden, was genutzt werden kann, um unterschiedliche Ladezustände der Batteriemodule auszugleichen. Auch ist es prinzipiell möglich, den primären DC/DC-Umsetzer 24-1 kurzzeitig abzuschalten und seine Funktion durch den sekundären DC/DC-Umsetzer 26-1 übernehmen zu lassen.

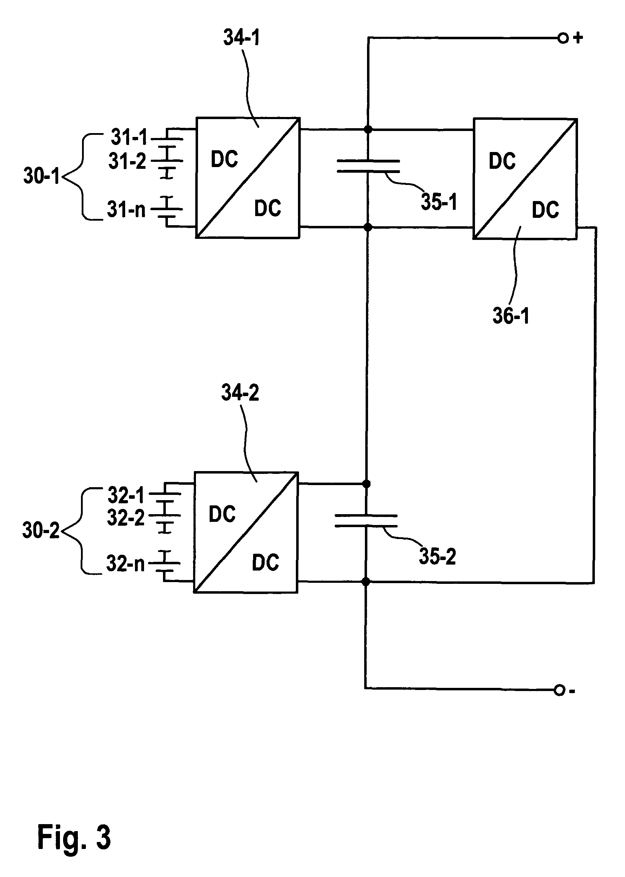

Fig. 3 zeigt eine zweite Variante des ersten Ausführungsbeispiels der Erfindung. Die zweite Variante des ersten Ausführungsbeispiels entspricht weitestgehend der ersten Variante, so dass das dort Gesagte auch auf die zweite Variante entsprechend zutrifft. Der einzige wesentliche Unterschied zur ersten Variante besteht darin, dass der sekundäre DC/DC-Umsetzer 36-1 eingangsseitig nicht mit dem untersten primären DC/DC-Umsetzer 34-2, sondern mit dem obersten primären DC/DC-Umsetzer 34-1 verbunden ist. Der sekundäre DC/DC-Umsetzer weist zudem keinen ersten Ausgang, sondern nur einen zweiten Ausgang auf, der mit einem Ausgang des primären DC/DC-Umsetzers 34-2 verbunden ist. Die zweite Variante erlaubt die Übertragung von Energie vom ersten primären DC/DC-Umsetzer 34-1 an den zweiten primären DC/DC-Umsetzer 34-2, so dass in der zweiten Variante des ersten Ausführungsbeispiels der zweite primäre DC/DC-Umsetzer 34-2 entlastet und der erste primäre DC/DC-Umsetzer 34-1 stärker belastet wird. Selbstverständlich ist auch eine Kombination der ersten und der zweiten Variante des ersten Ausführungsbeispiels möglich, so dass zwei sekundäre DC/DC-Umsetzer zum Einsatz gelangen und wahlweise Energie von und zu jedem der primären DC/DC-Umsetzer übertragen werden kann.

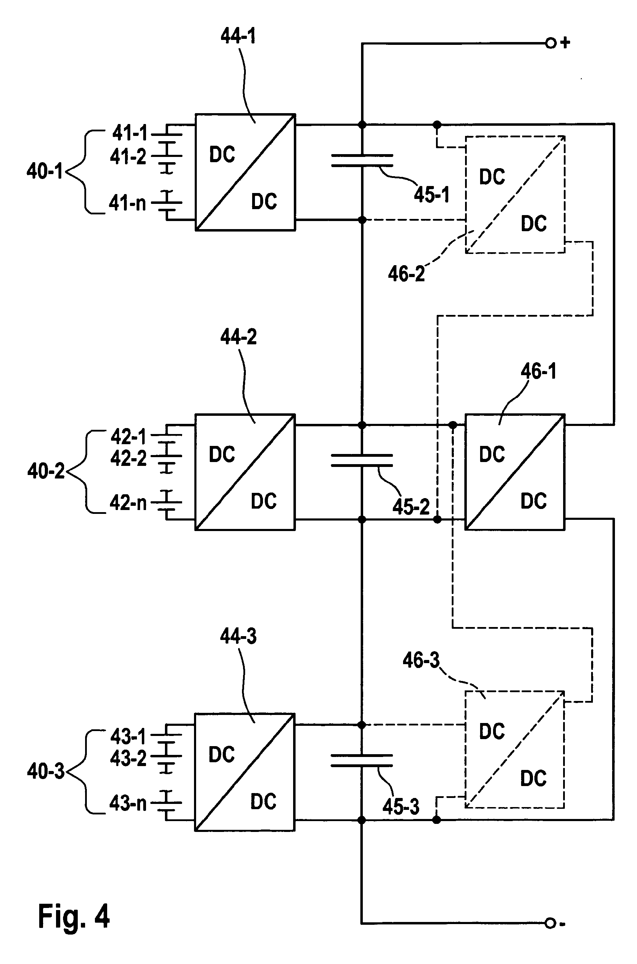

Fig. 4 zeigt ein zweites Ausführungsbeispiel der Erfindung. Das gezeigte Ausführungsbeispiel weist drei primäre DC/DC-Umsetzer 44-1 bis 44-3 auf, die eingangsseitig jeweils mit einem Batteriemodul 40-1 bis 40-3 verbunden sind. Jedes der Batteriemodule 40-1 bis 40-3 weist eine oder mehr Batteriezellen 41-1 bis 41-n, 42-1 bis 42-n bzw. 43-1 bis 43-n auf. Die Ausgänge der primären DC/DC-Umsetzer 44-1 bis 44-3 sind jeweils mit einem Pufferkondensator 45-1 bis 45-3 verbunden und in Serie geschaltet. Ein erster sekundärer DC/DC-Umsetzer 46-1 ist eingangsseitig mit den Ausgängen des zweiten primären DC/DC-Umsetzers 44-2 verbunden und entnimmt diesem bei Aktivierung Energie. Der erste sekundäre DC/DC-Umsetzer 46-1 besitzt zwei Ausgänge, von denen einer mit einem Ausgang des oberen benachbarten primären DC/DC-Umsetzers 44-1 und der andere mit einem Ausgang des unteren benachbarten primären DC/DC-Umsetzers 44-3 verbunden ist. Durch entsprechende Steuerung des ersten sekundären DC/DC-Umsetzers 46-1 kann die dem zweiten primären DC/DC-Umsetzer 44-2 entnommene Energie entweder dem oberen primären DC/DC-Umsetzer 44-1 oder dem unteren primären DC/DC-Umsetzer 44-3 zugeführt werden. Auch ist es möglich, alternierend dem unteren und dem oberen primären DC/DC-Umsetzer 44-1 bzw. 44-3 Energie zuzuführen, so dass im Mittel beiden benachbarten primären DC/DC-Umsetzern 44-1 und 44-3 Energie vom zweiten primären DC/DC-Umsetzer 44-2 zugeführt wird.

Um die Flexibilität der Anordnung zu erhöhen, können weitere sekundäre DC/DC-Umsetzer 46-2 und 46-3 vorgesehen sein (strichliert dargestellt), deren Eingänge mit den Ausgängen des oberen primären DC/DC-Umsetzers 44-1 bzw. des unteren primären DC/DC-Umsetzers 44-3 verbunden sind. Da diese beiden primären DC/DC-Umsetzer 44-1 und 44-3 jeweils nur einen benachbarten primären DC/DC-Umsetzer besitzen, genügt es, die sekundären DC/DC-Umsetzer 46-2 und 46-3 mit nur entweder einem ersten oder einem zweiten Ausgang auszustatten, so dass die Übertragung von Energie vom ersten primären DC/DC-Umsetzer 44-1 zum zweiten primären DC/DC-Umsetzer 44-2 bzw. vom dritten primären DC/DC-Umsetzer 44-3 zum zweiten primären DC/DC-Umsetzer 44-2 möglich ist. Durch diese Anordnung kann von jedem der primären DC/DC-Umsetzer 44-1 bis 44-3 Energie zu jedem beliebigen anderen primären DC/DC-Umsetzer 44-1 bis 44-3 übertragen werden, ggf. über eine Zwischenstation, z.B. durch Übertragung von Energie vom ersten primären DC/DC-Umsetzer 44-1 zum zweiten primären DC/DC-Umsetzer 44-2 bei gleichzeitiger Übertragung von Energie vom zweiten primären DC/DC-Umsetzer 44-2 zum dritten primären DC/DC-Umsetzer 44-3. Selbstredend ist es auch möglich, die gezeigte Struktur auf eine höhere Zahl von primären und sekundären DC/DC-Umsetzern auszudehnen.

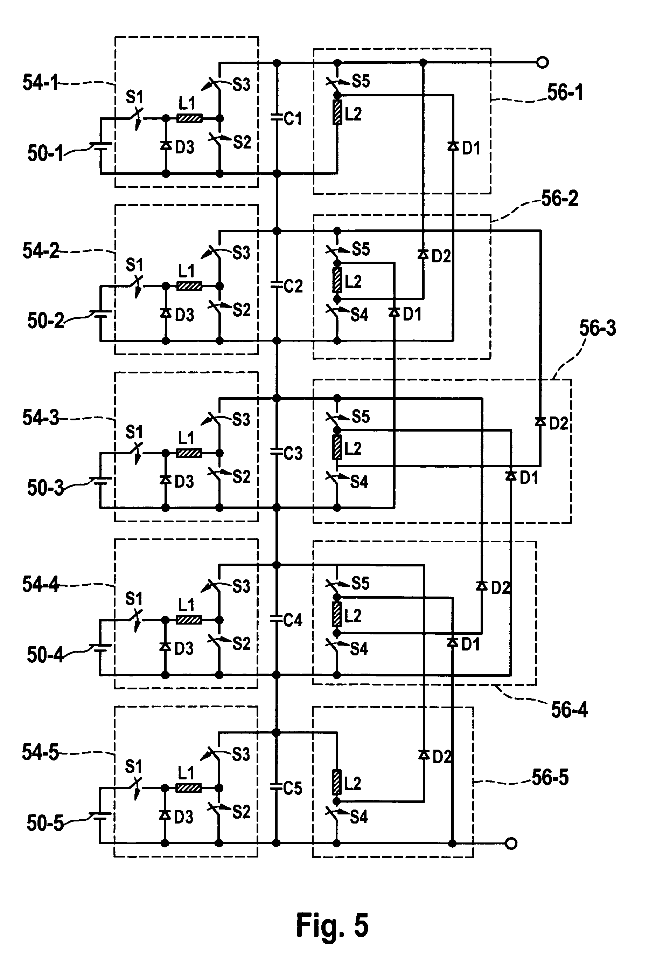

Fig. 5 zeigt ein detailliertes Schaltbild eines dritten Ausführungsbeispiels der Erfindung, bei dem insgesamt fünf primäre DC/DC-Umsetzer 54-1 bis 54-5 ausgangsseitig in Serie geschaltet sind. Die primären DC/DC-Umsetzer 54-1 bis 54-5 sind als einfache Hochsetz/Tiefsetzsteller mit Schaltern S2, S3, einer Spule L1 und einer Diode D3 ausgeführt. Es sind jedoch auch zahlreiche andere bekannte DC/DC-Umsetzer-Strukturen vorstellbar. Die primären DC/DC-Umsetzer 54-1 bis 54-5 verfügen jeweils über einen zusätzlichen Schalter S1, der dazu ausgebildet ist, das jeweils eingangsseitig angeschlossene Batteriemodul 50-1 bis 50-5 elektrisch von dem primären DC/DC-Umsetzer 54-1 bis 54-5 abzukoppeln und somit zu deaktivieren. Gleichzeitig können die Schalter S2 und S3 geschlossen werden, wodurch die Ausgänge des jeweiligen primären DC/DC-Umsetzers 54-1 bis 54-5 elektrisch leitend miteinander verbunden werden, so dass der jeweilige primäre DC/DC-Umsetzer 54-1 bis 54-5 neutralisiert und deaktiviert wird, ohne die Funktion der verbleibenden primären DC/DC-Umsetzer 54-1 bis 54-5 zu stören. Bei einer Weiterführung ist es möglich, die Ausgangsspannung eines oder mehrerer der verbleibenden primären DC/DC-Umsetzer 54-1 bis 54-5 zu erhöhen, um die Ausgangsspannung der Gesamtanordnung trotz des Ausfalls eines der primären DC/DC-Umsetzer 54-1 bis 54-5 konstant zu halten.

Jeder der primären DC/DC-Umsetzer 54-1 bis 54-5 ist ausgangsseitig wie bereits zuvor gezeigt mit einem Pufferkondensator C1 bis C5 verbunden, um die Ausgangsspannung des jeweiligen primären DC/DC-Umsetzers 54-1 bis 54-5 zu stabiliseren. Außerdem ist jedem der primären DC/DC-Umsetzer 54-1 bis 54-5 jeweils ein sekundärer DC/DC-Umsetzer 56-1 bis 56-5 zugeordnet. Wiederum verfügen der oberste bzw. der unterste sekundäre DC/DC-Umsetzer 56-1 bzw. 56-5 über jeweils nur entweder einen ersten oder zweiten Ausgang, da Energie nur an einen benachbarten primären DC/DC-Umsetzer 54-2 bzw. 54-4 übertragen werden soll. Die mittleren sekundären DC/DC-Umsetzer 56-2 bis 56-4 verfügen hingegen jeweils über einen ersten und einen zweiten Ausgang, so dass jeweils Energie an einen oberen und an einen unteren benachbarten primären DC/DC-Umsetzer 54-1 bis 54-5 übertragen werden kann. Die sekundären DC/DC-Umsetzer 56-1 bis 56-5 verfügen jeweils über eine Spule L2 und einen mit der Spule zwischen die Eingänge des sekundären DC/DC-Umsetzers 56-1 bis 56-5 in Serie geschalteten Schalter S4 bzw. S5. Die mittleren DC/DC-Umsetzer 56-2 bis 56-4 verfügen zusätzlich über einen weiteren Schalter, der mit dem ersten Schalter und der Spule L2 so in Serie geschaltet ist, dass die Spule L2 an jeweils entgegengesetzten Enden mit einem der Schalter S4 und S5 verbunden ist. Der erste und der zweite Ausgang der sekundären DC/DC-Umsetzer 56-1 bis 56-5 führen über eine Diode D1 bzw. D2 von jeweils einem zugeordneten Verbindungspunkt zwischen der Spule L2 und dem ersten Schalter S4 oder dem zweiten Schalter S5 zu entweder einem Ausgang des jeweils oberen oder unteren benachbarten primären DC/DC-Umsetzers 54-1 bis 54-5.

Die Dioden D1 und D2 sind dabei so geschaltet, dass bei einer Entnahme von Energie aus der Gesamtanordnung, z.B. beim Beschleunigen eines mit der Gesamtanordnung ausgestatteten Kraftfahrzeuges, Energie über den ersten Ausgang und die erste Diode D1 jeweils an den oberen benachbarten primären DC/DC-Umsetzer 54-1 bis 54-4, und bei einer Rück- oder Zuführung von Energie in die Batteriemodule 50-1 bis 50-5, beispielsweise beim Abbremsen oder stationären Aufladen eines mit der Gesamtanordnung ausgestatteten Kraftfahrzeuges, über den zweiten Ausgang und die zweite Diode D2 jeweils an den unteren benachbarten primären DC/DC-Umsetzer 54-2 bis 54-5 übertragen werden kann.

## Patentansprüche

1. Ein Energieübertrager für ein Batteriesystem, der Energieübertrager umfassend einen ersten und einen zweiten primären DC/DC-Umsetzer (24, 34, 44, 54) mit jeweils zwei Eingängen und zwei Ausgängen, wobei die Eingänge für das Anschließen eines Batteriemoduls (20, 30, 40, 50) ausgebildet sind und wobei der erste und der zweite primäre DC/DC-Umsetzer (24, 34, 44, 54) ausgangsseitig in Serie geschaltet sind, **gekennzeichnet durch** wenigstens einen ersten sekundären DC/DC-Umsetzer (26-1, 36-1, 46-1, 56-1) mit zwei Eingängen, die mit den Ausgängen des zweiten primären DC/DC-Umsetzers (24-2, 34-1, 44-2, 54-2) verbunden sind, und mit einem mit einem der Ausgänge des ersten primären DC/DC-Umsetzers (24-1, 34-2, 44-1, 54-1) verbundenen ersten Ausgang.

2. Der Energieübertrager von Anspruch 1, bei dem der erste sekundäre DC/DC-Umsetzer (26-1, 36-1, 46-1, 56-1) ausgebildet ist, dem zweiten primären DC/DC-Umsetzer (24-2, 34-1, 44-2, 54-2) Energie zu entnehmen und an den ersten primären DC/DC-Umsetzer (24-1, 34-2, 44-2, 54-2) zu übertragen.

3. Der Energieübertrager von einem der Ansprüche 1 oder 2, mit einem zweiten sekundären DC/DC-Umsetzer (26-1, 36-1, 46-2, 46-3, 56-1,..., 56-5) mit zwei Eingängen, die mit den Ausgängen des ersten primären DC/DC-Umsetzers (24-1, 34-2, 44-1, 44-3, 54-1,..., 54-5) verbunden sind, und mit einem mit einem der Ausgänge des zweiten primären DC/DC-Umsetzers (24-2, 34-1, 44-2, 54-2,..., 54-4) verbundenen ersten Ausgang, wobei der zweite sekundäre DC/DC-Umsetzer (26-1, 36-1, 46-2, 46-3, 56-1,..., 56-5) ausgebildet ist, dem ersten primären DC/DC-Umsetzer (24-1, 34-2, 44-1, 44-3, 54-2,..., 54-4) Energie zu entnehmen und an den zweiten primären DC/DC-Umsetzer (24-2, 34-1, 44-2, 54-1,..., 54-5) zu übertragen.

4. Der Energieübertrager von einem der vorhergehenden Ansprüche, mit einem dritten primären DC/DC-Umsetzer (44-3, 54-3) mit zwei für das Anschließen eines Batteriemoduls (40-3, 50-3) ausgebildeten Eingängen und zwei Ausgängen, wobei der dritte primäre DC/DC-Umsetzer (44-3, 54-3) mit dem ersten und dem zweiten primären DC/DC-Umsetzer (44-1, 44-2; 54-1, 54-2) ausgangsseitig so in Serie geschaltet ist, dass der zweite primäre DC/DC-Umsetzer (44-2, 54-2) direkt mit dem ersten und dem dritten primären DC/DC-Umsetzer (44-1, 44-3; 54-1, 54-3) verbunden ist, und wobei der erste sekundäre DC/DC-Umsetzer (46-1, 56-2) einen mit einem Ausgang des dritten primären DC/DC-Umsetzers (44-3, 54-3) verbundenen zweiten Ausgang aufweist.

5. Der Energieübertrager von Anspruch 4, bei dem der erste sekundäre DC/DC-Umsetzer (46-1, 56-2) ausgebildet ist, dem zweiten primären DC/DC-Umsetzer (44-2, 54-2) Energie zu entnehmen und in einem Entlademodus des Energieübertragers für das Entladen der Batteriemodule (40-1,..., 40-3, 50-1,..., 50-5) an den ersten primären DC/DC-Umsetzer (44-1, 54-1) und in einem Auflademodus des Energieübertragers für das Aufladen der Batteriemodule (40-1,..., 40-3, 50-1,..., 50-5) an den dritten primären DC/DC-Umsetzer (44-3, 54-3) zu übertragen.

6. Der Energieübertrager von einem der vorhergehenden Ansprüche, bei dem der erste sekundäre DC/DC-Umsetzer (26-1, 36-1, 46-1,..., 46-3, 56-1,..., 56-5) über eine Spule (L2), einen ersten Schalter (S4, S5) und eine erste Diode (D1, D2) verfügt, wobei die Spule (L2) und der erste Schalter (S4, S5) zwischen die Eingänge des ersten sekundären DC/DC-Umsetzers (26-1, 36-1, 46-1,..., 46-3, 56-1,..., 56-5) in Serie geschaltet sind und die Diode (D1, D2) zwischen einen Verbindungspunkt zwischen Spule (L2) und erstem Schalter (S4, S5) und den ersten Ausgang des ersten sekundären DC/DC-Umsetzers (26-1, 36-1, 46-1,..., 46-3, 56-1,..., 56-5) geschaltet ist.

7. Der Energieübertrager von Anspruch 6 und einem der Ansprüche 4 oder 5, bei dem der erste sekundäre DC/DC-Umsetzer (46-1, 56-2,..., 56-4) außerdem über einen zweiten Schalter (S4) und eine zweite Diode (D2) verfügt, wobei der zweite Schalter (S4) mit dem ersten Schalter (S5) und der Spule (L2) so in Serie zwischen die Eingänge des ersten sekundären DC/DC-Umsetzers (46-1, 56-2,..., 56-4) geschaltet ist, dass die Spule (L2) zwischen den ersten und den zweiten Schalter (S5, S4) geschaltet ist, und wobei die zweite Diode (D2) zwischen einen Verbindungspunkt zwischen Spule (L2) und zweiten Schalter (S4) und den zweiten Ausgang des ersten sekundären DC/DC-Umsetzers (46-1, 56-2,..., 56-4) geschaltet ist.

8. Der Energieübertrager von einem der vorhergehenden Ansprüche, bei dem jeder primäre DC/DC-Umsetzer (24-1, 24-2, 34-1, 34-2, 44-1,..., 44-3, 54-1,..., 54-5) einen Steuereingang für ein Steuersignal aufweist und ausgebildet ist, auf den Empfang des Steuersignals hin die Ausgänge des primären DC/DC-Umsetzers (24-1, 24-2, 34-1, 34-2, 44-1,..., 44-3, 54-1,..., 54-5) miteinander elektrisch zu verbinden und wenigstens einen der Eingänge des primären DC/DC-Umsetzers (24-1, 24-2, 34-1, 34-2, 44-1,..., 44-3, 54-1,..., 54-5) elektrisch abzukoppeln.

9. Ein Batteriesystem mit einem Energieübertrager nach einem der vorhergehenden Ansprüche und einer Mehrzahl von Batteriemodulen (20-1, 20-2, 30-1, 30-2, 40-1,..., 40-3, 50-1,..., 50-5), welche jeweils über wenigstens eine Batteriezelle (21-1,..., 21-n, 22-1,..., 22-n, 31-1,..., 31-n, 32-1,..., 32-n, 41-1,..., 41-n, 42-1,..., 42-n, 43-1,..., 43-n) verfügen und deren Batteriepole mit den Eingängen eines der primären DC/DC-Umsetzer (24-1, 24-2, 34-1, 34-2, 44-1,..., 44-3, 54-1,..., 54-5) des Energieübertragers lösbar verbunden sind.

10. Ein Kraftfahrzeug mit einem Energieübertrager nach einem der Ansprüche 1 bis 8.

## Claims

1. Energy transmitter for a battery system, the energy transmitter comprising a first and a second primary DC/DC converter (24, 34, 44, 54), each having two inputs and two outputs, the inputs being designed for connection of a battery module (20, 30, 40, 50), and the first and second primary DC/DC converters (24, 34, 44, 54) being connected in series on the output side, **characterized by** at least one first secondary DC/DC converter (26-1, 36-1, 46-1, 56-1) with two inputs, which are connected to the outlets of the second primary DC/DC converter (24-2, 34-1, 44-2, 54-2), and with a first output, which is connected to one of the outputs of the first primary DC/DC converter (24-1, 34-2, 44-1, 54-1).

2. Energy transmitter according to Claim 1, in which the first secondary DC/DC converter (26-1, 36-1, 46-1, 56-1) is designed to draw energy from the second primary DC/DC converter (24-2, 34-1, 44-2, 54-2) and to transmit energy to the first primary DC/DC converter (24-1, 34-2, 44-2, 54-2).

3. Energy transmitter according to either of Claims 1 and 2, with a second secondary DC/DC converter (26-1, 36-1, 46-2, 46-3, 56-1, ..., 56-5) with two inputs, which are connected to the outputs of the first primary DC/DC converter (24-1, 34-2, 44-1, 44-3, 54-1, ..., 54-5), and with a first output which is connected to one of the outputs of the secondary primary DC/DC converter (24-2, 34-1, 44-2, 54-2, ..., 54-4) the second secondary DC/DC converter (26-1, 36-1, 46-2, 46-3, 56-1, ..., 56-5) being designed to draw energy from the first primary DC/DC converter (24-1, 34-2, 44-1, 44-3, 54-2, ..., 54-4) and to transmit energy to the second primary DC/DC converter (24-2, 34-1, 44-2, 54-1, ..., 54-5).

4. Energy transmitter according to one of the preceding claims, with a third primary DC/DC converter (44-3, 54-3) with two inputs designed for connection of a battery module (40-3, 50-3) and two outputs, the third primary DC/DC converter (44-3, 54-3) being connected in series with the first and second primary DC/DC converters (44-1, 44-2; 54-1, 54-2) on the output side in such a way that the second primary DC/DC converter (44-2, 54-2) is connected directly to the first and third primary DC/DC converters (44-1, 44-3; 54-1, 54-3), and the first secondary DC/DC converter (46-1, 56-2) having a second output, which is connected to an output of the third primary DC/DC converter (44-3, 54-3).

5. Energy transmitter according to Claim 4, in which the first secondary DC/DC converter (46-1, 56-2) is designed to draw energy from the second primary DC/DC converter (44-2, 54-2) and to transmit energy to the first primary DC/DC converter (44-1, 54-1) in a discharge mode of the energy transmitter for discharging the battery modules (40-1, ..., 40-3, 50-1, ..., 50-5) and to the third primary DC/DC converter (44-3, 54-3) in a charge mode of the energy transmitter for charging the battery modules (40-1, ..., 40-3, 50-1, ..., 50-5).

6. Energy transmitter according to one of the preceding claims, in which the first secondary DC/DC converter (26-1, 36-1, 46-1, ..., 46-3, 56-1, ..., 56-5) has a coil (L2), a first switch (S4, S5) and a first diode (D1, D2), the coil (L2) and the first switch (S4, S5) being connected in series between the inputs of the first secondary DC/DC converter (26-1, 36-1, 46-1, ..., 46-3, 56-1, ..., 56-5), and the diode (D1, D2) being connected between a node between the coil (L2) and the first switch (S4, S5) and the first output of the first secondary DC/DC converter (26-1, 36-1, 46-1, ..., 46-3, 56-1, ..., 56-5).

7. Energy transmitter according to Claim 6 and either of Claims 4 and 5, in which the first secondary DC/DC converter (46-1, 56-2, ..., 56-4) also has a second switch (S4) and a second diode (D2), the second switch (S4) being connected in series with the first switch (S5) and the coil (L2) between the inputs of the first secondary DC/DC converter (46-1, 56-2, ..., 56-4) in such a way that the coil (L2) is connected between the first and second switches (S5, S4), and the second diode (D2) being connected between a node between the coil (L2) and the second switch (S4) and the second output of the first secondary DC/DC converter (46-1, 56-2, ..., 56-4).

8. Energy transmitter according to one of the preceding claims, in which each primary DC/DC converter (24-1, 24-2, 34-1, 34-2, 44-1, ..., 44-3, 54-1, ..., 54-5) has a control input for a control signal and is designed to electrically connect the outputs of the primary DC/DC converter (24-1, 24-2, 34-1, 34-2, 44-1, ..., 44-3, 54-1, ..., 54-5) to one another and to electrically decouple at least one of the inputs of the primary DC/DC converter (24-1, 24-2, 34-1, 34-2, 44-1, ..., 44-3, 54-1, ..., 54-5), for reception of the control signal.

9. Battery system with an energy transmitter according to one of the preceding claims and a plurality of battery modules (20-1, 20-2, 30-1, 30-2, 40-1, ..., 40-3, 50-1, ..., 50-5), which each have at least one battery cell (21-1, ..., 21-n, 22-1, ..., 22-n, 31-1, ..., 31-n, 32-1, ..., 32-n, 41-1, ..., 41-n, 42-1, ..., 42-n, 43-1, ..., 43-n) and whose battery terminals are detachably connected to the inputs of one of the primary DC/DC converters (24-1, 24-2, 34-1, 34-2, 44-1, ..., 44-3, 54-1, ..., 54-5) of the energy transmitter.

10. Motor vehicle with an energy transmitter according to one of Claims 1 to 8.

## Revendications

1. Transmetteur d'énergie pour un système de batterie, le transmetteur d'énergie comprenant un premier et un deuxième convertisseurs CC/CC primaires (24, 34, 44, 54) chacun muni de deux entrées et de deux sorties, les entrées étant configurées pour le raccordement d'un module à batterie (20, 30, 40, 50) et les premier et deuxième convertisseurs CC/CC primaires (24, 34, 44, 54) étant branchés en série du côté de la sortie, **caractérisé par** au moins un convertisseur CC/CC secondaire (26-1, 36-1, 46-1, 56-1) muni de deux entrées qui sont reliées avec les sorties du deuxième convertisseur CC/CC primaire (24-2, 34-1, 44-2, 54-2) et muni d'une première sortie reliée avec l'une des sorties du premier convertisseur CC/CC primaire (24-1, 34-2, 44-1, 54-1).

2. Transmetteur d'énergie selon la revendication 1, avec lequel le premier convertisseur CC/CC secondaire (26-1, 36-1, 46-1, 56-1) est configuré pour prélever de l'énergie du deuxième convertisseur CC/CC primaire (24-2, 34-1, 44-2, 54-2) et pour la transmettre au premier convertisseur CC/CC primaire (24-1, 34-2, 44-2, 54-2).

3. Transmetteur d'énergie selon l'une des revendications 1 ou 2, comprenant un deuxième convertisseur CC/CC secondaire (26-1, 36-1, 46-2, 46-3, 56-1, ..., 56-5) muni de deux entrées qui sont reliées avec les sorties du premier convertisseur CC/CC primaire (24-1, 34-2, 44-1, 44-3, 54-1, ..., 54-5) et muni d'une première sortie qui est reliée avec l'une des sorties du deuxième convertisseur CC/CC primaire (24-2, 34-1, 44-2, 54-2, ..., 54-4), le deuxième convertisseur CC/CC secondaire (26-1, 36-1, 46-2, 46-3, 56-1, ..., 56-5) étant configuré pour prélever de l'énergie du premier convertisseur CC/CC primaire (24-1, 34-2, 44-1, 44-3, 54-2, ..., 54-4) et pour la transmettre au deuxième convertisseur CC/CC primaire (24-2, 34-1, 44-2, 54-1, ..., 54-5).

4. Transmetteur d'énergie selon l'une des revendications précédentes, comprenant un troisième convertisseur CC/CC primaire (44-3, 54-3) muni de deux entrées configurées pour le raccordement d'un module à batterie (40-3, 50-3) et de deux sorties, le troisième convertisseur CC/CC primaire (44-3, 54-3) étant branché en série du côté de la sortie avec les premier et deuxième convertisseurs CC/CC primaires (44-1, 44-2 ; 54-1, 54-2) de telle sorte que le deuxième convertisseur CC/CC primaire (44-2, 54-2) est relié directement avec le premier et le troisième convertisseurs CC/CC primaires (44-1, 44-3 ; 54-1, 54-3) et le premier convertisseur CC/CC secondaire (46-1, 56-2) présentant une deuxième sortie qui est reliée avec une sortie du troisième convertisseur CC/CC primaire (44-3, 54-3).

5. Transmetteur d'énergie selon la revendication 4, avec lequel le premier convertisseur CC/CC secondaire (46-1, 56-2) est configuré pour prélever de l'énergie du deuxième convertisseur CC/CC primaire (44-2, 54-2) et pour la transmettre, dans un mode de décharge du transmetteur d'énergie destiné à la décharge du module à batterie (40-1, ..., 40-3, 50-1, ..., 50-5), au premier convertisseur CC/CC primaire (44-1, 54-1) et, dans un mode de charge du transmetteur d'énergie destiné à la charge du module à batterie (40-1, ..., 40-3, 50-1, ..., 50-5), au troisième convertisseur CC/CC primaire (44-3, 54-3).

6. Transmetteur d'énergie selon l'une des revendications précédentes, avec lequel le premier convertisseur CC/CC secondaire (26-1, 36-1, 46-1, ..., 46-3, 56-1, ..., 56-5) dispose d'une bobine (L2), d'un premier commutateur (S4, S5) et d'une première diode (D1, D2), la bobine (L2) et le premier commutateur (S4, S5) étant branchés en série entre les entrées du premier convertisseur CC/CC secondaire (26-1, 36-1, 46-1, ..., 46-3, 56-1, ..., 56-5) et la diode (D1, D2) étant branchée entre un point de liaison entre la bobine (L2) et le premier commutateur (S4, S5) et la première sortie du premier convertisseur CC/CC secondaire (26-1, 36-1, 46-1, ..., 46-3, 56-1, ..., 56-5).

7. Transmetteur d'énergie selon la revendication 6 et selon l'une des revendications 4 ou 5, avec lequel le premier convertisseur CC/CC secondaire (46-1, 56-2, ..., 56-4) dispose en outre d'un deuxième commutateur (S4) et d'une deuxième diode (D2), le deuxième commutateur (S4) étant branché en série avec le premier commutateur (S5) et la bobine (L2) entre les entrées du premier convertisseur CC/CC secondaire (46-1, 56-2, ..., 56-4) de telle sorte que la bobine (L2) est branchée entre les premier et deuxième commutateurs (S5, S4) et la deuxième diode (D2) étant branchée entre un point de liaison entre la bobine (L2) et le deuxième commutateur (S4) et la deuxième sortie du premier convertisseur CC/CC secondaire (46-1, 56-2, ..., 56-4).

8. Transmetteur d'énergie selon l'une des revendications précédentes, avec lequel chaque convertisseur CC/CC primaire (24-1, 24-2, 34-1, 34-2, 44-1, ..., 44-3, 54-1, ..., 54-5) présente une entrée de commande pour un signal de commande et est configuré pour, sur réception du signal de commande, relier électriquement entre elles les sorties du convertisseur CC/CC primaire (24-1, 24-2, 34-1, 34-2, 44-1, ..., 44-3, 54-1, ..., 54-5) et déconnecter électriquement au moins l'une des entrées du convertisseur CC/CC primaire (24-1, 24-2, 34-1, 34-2, 44-1, ..., 44-3, 54-1, ..., 54-5).

9. Système de batterie comprenant un transmetteur d'énergie selon l'une des revendications précédentes et une pluralité de modules à batterie (20-1, 20-2, 30-1, 30-2, 40-1, ..., 40-3, 50-1, ..., 50-5) qui disposent respectivement d'au moins une cellule de batterie (21-1, ..., 21-n, 22-1, ..., 22-n, 31-1, ..., 31-n, 32-1, ..., 32-n, 41-1, ..., 41-n, 42-1, ..., 42-n, 43-1, ..., 43-n) et dont les pôles de batterie sont reliées de manière amovible avec les entrées de l'un des premiers convertisseurs CC/CC primaires (24-1, 24-2, 34-1, 34-2, 44-1, ..., 44-3, 54-1, ..., 54-5) du transmetteur d'énergie.

10. Véhicule automobile comprenant un transmetteur d'énergie selon l'une des revendications 1 à 8.
